Europäisches Patentamt

European Patent Office

Office européen des brevets

(19)

(11) Numéro de publication: **0 241 378**
**B1**

(12) **FASCICULE DE BREVET EUROPEEN**

(45) Date de publication du fascicule du brevet:
**24.05.89**

(51) Int. Cl.⁴: **F16D 3/84**

(21) Numéro de dépôt: **87400801.4**

(22) Date de dépôt: **09.04.87**

(54) **Gaine d'étanchéité à soufflet pour joint articulé.**

(30) Priorité: **11.04.86 FR 8605402**

(43) Date de publication de la demande:
**14.10.87 Bulletin 87/42**

(45) Mention de la délivrance du brevet:
**24.05.89 Bulletin 89/21**

(84) Etats contractants désignés:
**DE ES GB IT**

(56) Documents cités:
**FR-A- 1 465 613**
**FR-A- 2 245 872**
**FR-A- 2 550 293**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Halconruy, Thierry Hubert, 58, rue des Chantiers, F-78000 Versailles(FR)**
Inventeur: **Tixier, Jean-Michel François, 35, rue Gabriel Péri, F-92320 Chatillon sous Bagneux(FR)**

(74) Mandataire: **Boivin, Claude, 9, rue Edouard-Charton, F-78000 Versailles(FR)**

## Description

Les joints articulés doivent être lubrifiés en permanence; cette lubrification est assurée par de la graisse enfermée dans une gaine d'étanchéité à soufflet entourant le joint.

La quantité de graisse enfermée dans les gaines d'étanchéité actuellement réalisées est assez importante, de l'ordre de 130 à 160 grammes pour un joint homocinétique se trouvant du côté de la boîte de vitesses d'un véhicule de gamme moyenne. Lorsque la vitesse de rotation du joint est élevée, la force centrifuge qui s'exerce sur la graisse est importante et a des effets néfastes sur la gaine.

Pour réduire la quantité de graisse contenue dans le joint on pourrait diminuer les dimensions de la gaine; mais le soufflet serait alors plus près des arbres reliés par le joint, ce qui entraînerait un risque d'abrasion. On a également proposé de prévoir des anneaux à l'extérieur de la gaine; mais les problèmes d'abrasion se passent également dans ce cas, les anneaux frottant au fond des plis du soufflet.

Le brevet français 1.465.613 qui a été utilisé pour la délimitation de la revendication décrit une gaine d'étanchéité à soufflet comprenant un soufflet qui relie deux manchons destinés à être montés respectivement sur l'élément menant et sur l'élément mené et qui présente un anneau intérieur dans le prolongement du premier pli du côté de l'un des éléments. Cet anneau rigidifie le joint et lui permet de bien résister aux effets de la force centrifuge.

La présente invention a pour objet un perfectionnement apporté aux gaines d'étanchéité de ce type qui permet de réduire la quantité de graisse nécessaire et permet d'augmenter encore la résistance de la gaine aux effets de la force centrifuge.

La gaine selon l'invention est caractérisée en ce qu'un déflecteur est monté sur l'autre élément, du côté du premier élément par rapport à l'anneau intérieur, en étant solidaire de cet autre élément et en ayant aucun contact avec l'anneau.

Ce déflecteur et l'anneau intérieur constituent une chicane qui réalise une importante perte de charge entre les deux côtés de la gaine tout en conservant la souplesse de débattement du soufflet.

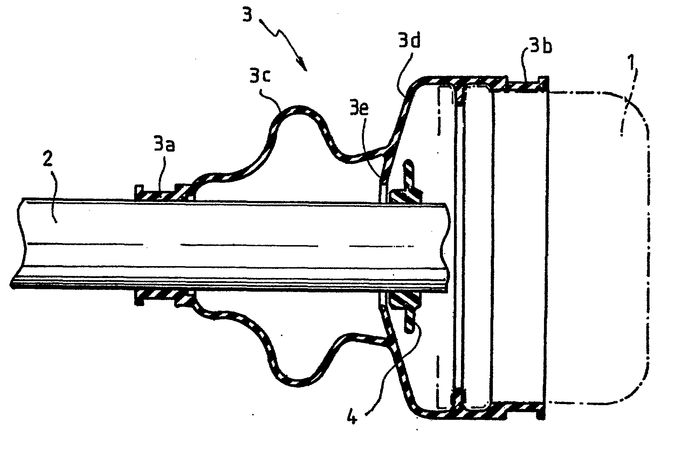

On a décrit ci-après, à titre d'exemple non limitatif, un mode de réalisation de la gaine d'étanchéité selon l'invention, avec référence à la Figure Unique du dessin annexé qui est une vue en coupe de ce joint.

Au dessin, on voit un élément menant 1, par exemple un bol, et un élément mené 2, par exemple un arbre, qui sont reliés l'un à l'autre par un joint de transmission articulé; celui-ci est recouvert par une gaine d'étanchéité désignée dans son ensemble par la référence 3 et contenant de la graisse.

La gaine 3 présente un manchon 3a de faible diamètre monté sur l'arbre 2, un manchon 3b de plus grand diamètre qui est monté sur le bol 1, et un soufflet 3c qui relie les deux manchons. Ce soufflet comporte dans le prolongement du premier pli 3d du côté du bol un anneau intérieur 3e qui n'est pas au contact de l'arbre.

Un déflecteur 4 qui a une forme de révolution et peut être par exemple en caoutchouc, est disposé sur l'arbre 2 du côté du bol 1 par rapport à l'anneau intérieur 3e, sans être au contact de cet anneau; ce déflecteur est solidaire de l'arbre, par exemple en étant emmanché à force sur celui-ci.

L'anneau intérieur 3e et le déflecteur 4 n'ayant aucune liaison mécanique, la souplesse d'origine du soufflet n'est que peu affectée par le débattement du joint. La quantité de graisse peut être réduite, ce qui apporte un gain de poids et contribue à une réduction de l'excentration de la gaine sous l'effet de la force centrifuge.

La graisse étant concentrée, par la chicane formée par l'anneau 3e et le déflecteur 4, au voisinage des parties mobiles, est plus efficace.

## Revendications

Gaine d'étanchéité à soufflet pour joint articulé comprenant un soufflet (3c) qui relie deux manchons (3a et 3b) destinés à être montés respectivement sur l'élément menant (1) et sur l'élément mené (2) et qui présente un anneau intérieur (3e) dans le prolongement du premier pli (3d) du côté de l'un (1) des éléments, caractérisé en ce qu'un déflecteur (4) est monté sur l'autre élément (2), du côté du premier élément (1) par rapport à l'anneau intérieur (3e), en étant solidaire de cet autre élément (2) et en ayant aucun contact avec l'anneau (3e).

## Patentansprüche

Balgmanschette zur Abdichtung einer Gelenkverbindung mit einem Balg (3c), der zwei Muffen (3a und 3b) miteinander verbindet, die jeweils auf ein treibendes Element (1) und ein angetriebenes Element (2) montierbar sind und der in der Verlängerung der ersten Falte (3d) an der Seite des einen (1) der Elemente einen inneren Ring (3e) aufweist, dadurch gekennzeichnet, da auf dem anderen Element (2) an der in bezug auf den inneren Ring (3e) dem ersten Element (1) zugewandten Seite ein Abweiser (4) montiert ist, der kraftschlüssig mit diesem anderen Element (2) verbunden ist und mit dem Ring (3e) keinen Kontakt hat.

## Claims

A bellows sealing sheath for an articulated joint comprising a bellows (3c) which connects together two sleeves (3a und 3b) intended for mounting respectively on the driving element (1) and on the driven element (2) and which comprises an inner ring (3e) in the extension of the first fold (3d) on the side of one (1) of the elements, characterized in that a deflector (4) is mounted on the other element (2), on the first element (1) side with respect to the inner ring (3e), while being fast with this other element (2) and having no contact with the ring (3e).